# EUROPEAN PATENT APPLICATION

(11) **EP 1 308 827 A2**
(43) Date of publication of application: **07.05.2003**
(21) Application number: 02257546.8
(22) Date of filing: 30.10.2002
(51) Int. Cl.: G06F 1/26, G06F 1/32

(54) **Portable computer apparatus with power saving for wireless communication module**

(30) Priority: 06.11.2001 KR 2001068918
(71) Applicant: SAMSUNG ELECTRONICS Co. Ltd., Kyungki-do, Seoul (KR)
(72) Inventor: Kim, Moon-kyou, Suwon-city, Kyungki-do (KR); Lee, Byung-lae, Suwon-city, Kyungki-do (KR)
(74) Representative: Geary, Stuart Lloyd

(57) **Abstract**

In a portable computer apparatus (1), the supply of power to a wireless communication module (30; 30a) is controlled in dependence on the need for the module (30; 30a). Thus, when the module (30; 30a) is not required, the major part of the module (30; 30a) is powered down.

## Description

The present invention relates to portable computer apparatus including a wireless communication module.

Various types of portable computer, including laptops, notebook computers and palmtop computers, are well-known. The usefulness of these devices is greatly enhanced when they are used with wireless modems.

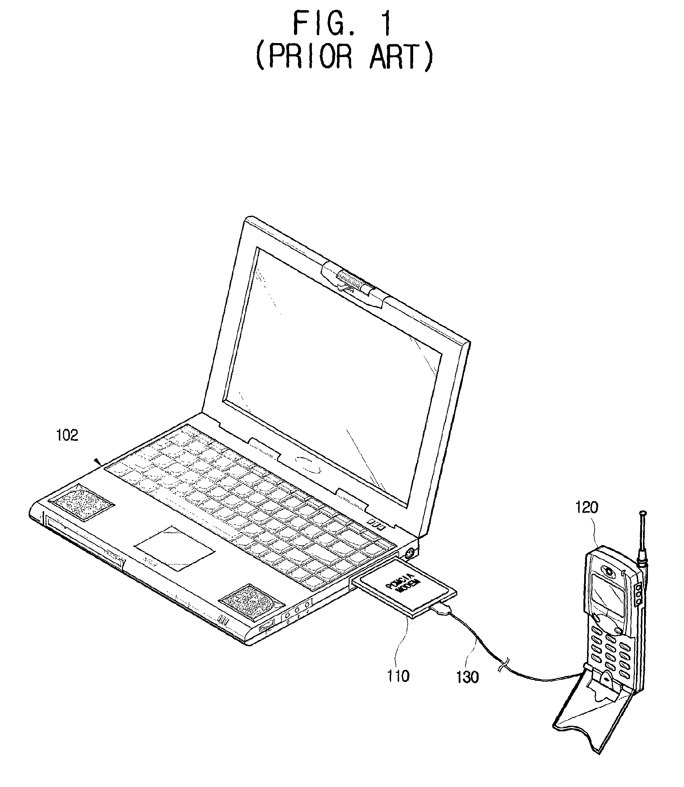

Referring to Figure 1, a conventional portable computer is shown with a PCMCIA wireless modem card 110, by way of example, plugged into the main body 102 of the computer. A mobile phone 120 is connected to the wireless modem 110 for the transmission and reception of data signals.

However, in the conventional portable computer, if any one of the wireless modem card, the mobile phone and the cable connecting the wireless modem card and the mobile phone is not prepared, wireless data communication is impossible.

It has been proposed to include mobile phone circuitry and an antenna in a PCMCIA card for providing wireless connectivity for mobile computing devices. However, these cards represent an undesirable drain on the batteries of such devices.

An apparatus according to the present invention is characterised by means for determining whether use of the wireless communication module is required and means for controlling the supply of power to said module in dependence on the result of said determination.

Preferably, the means for determining whether use of the wireless communication module is required comprises a device driver for the module.

Preferably, the means for controlling the supply of power to the module comprises a processor comprised in the module.

Preferably, the apparatus comprises a main board containing a central processing unit. The module may be integrated into the main board or plugged into the main board.

More preferably, the main board includes a USB bus and the module is configured to receive data and/or power from said bus.

Embodiments of the invention will now be described, by way of example, with reference to Figures 2 to 4 of the accompanying drawings, in which:
Figure 1 shows a conventional portable computer with a wireless modem and a mobile phone;
Figure 2 shows a portable computer according to the present invention;
Figure 3 is a block diagram of the portable computer of Figure 2; and
Figure 4 is a block diagram of another portable computer according to the present invention.

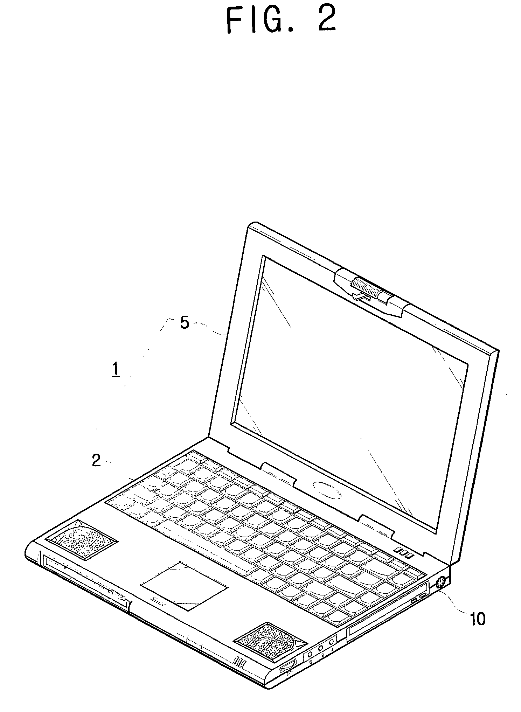

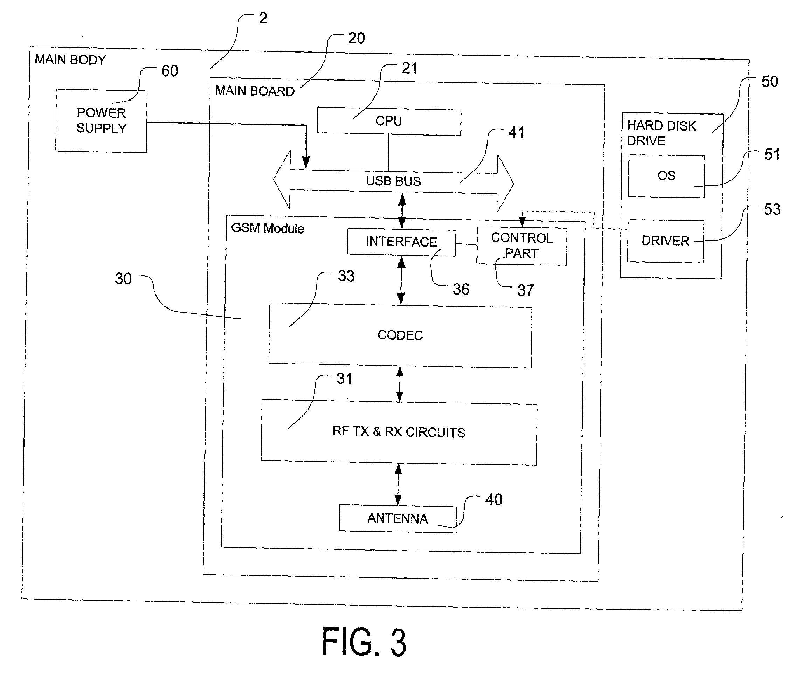

Referring to Figures 2 and 3, a portable computer according to the present invention 1 comprises a main body 2 equipped with a CPU (central processing unit) 21 and an LCD (liquid crystal display) 5.

The main body 2 includes a casing 10 defining its external appearance, a main board 20 carrying a BIOS-ROM (basic input/output system-read only memory: not shown), a hard disk drive 50 on which an operating system 51 is stored and a plurality of hardware components such as a power supply 60 supplying electric power at the correct voltages to the other components the computer system.

A GSM module driver program 53 is stored on the hard disk drive 50 in addition to the operating system 51 (e.g. Windows). The GSM module driver program 53 provides an interface between the operating system and a GSM module 30 (described below) to enable the computer system to transmit and receive data, for example for communication with a remote server.

A GSM module 30 is provided on the main board 20 and comprises an RF transmit modulator/PA and receiver front end circuits 31, a codec 33, a interface 36, a control part 37 and an antenna 40. The codec 33 encodes data signals from the main board and outputs a modulating signal to the modulator/PA part of the RF transmit modulator/PA and receiver front end circuits 31. The codec 33 also decodes data signals received by the receiver part of the RF transmit modulator/PA and receiver front end circuits 31. If the receiver front end is of the direct conversion type, no IF stage is required and the codec 33 can process IQ sample pairs directly from the front end. The interface 36 enables the passage of data between a USB bus 41 on the main board 20 and the GSM module 30 and delivers electric power from the power supply 60. The control part 37 controls, amongst other function, the supply of electric power through the interface 36 and itself receives control signals generated by the GSM module driver program 53.

The control part 37 is comprised of a microcontroller provided in the GSM module 30 and controls the interface 36, so as to control the supply of electric power from the main board 20 to the GSM module 30. Under the control of the control part 37, a switch in the interface 36 cuts off the electric power from the power supply 60 when the GSM module driver program 53 is not being used, although the control part 37 remains powered. Conversely, the control part 37 electrically controls the switch in the interface 36 to deliver electric power from the power supply 60 to the GSM module 30 when the GSM module driver program 53 is not being used.

With this configuration, when a user runs the GSM module driver program 53, for instance to view a web site using a web browser program, GSM module driver program 53 commands the control part 37 to transmit a control signal to the interface 36 which causes the interface 36 to supply power to the GSM module 30 and activate it.

When GSM module 30 is no longer required, e.g. because all networking programs have been closed, the GSM module driver program 53 causes the control part 37 to transmit a control signal to the interface 36 so that it interrupts the supply of power to the GSM module 30.

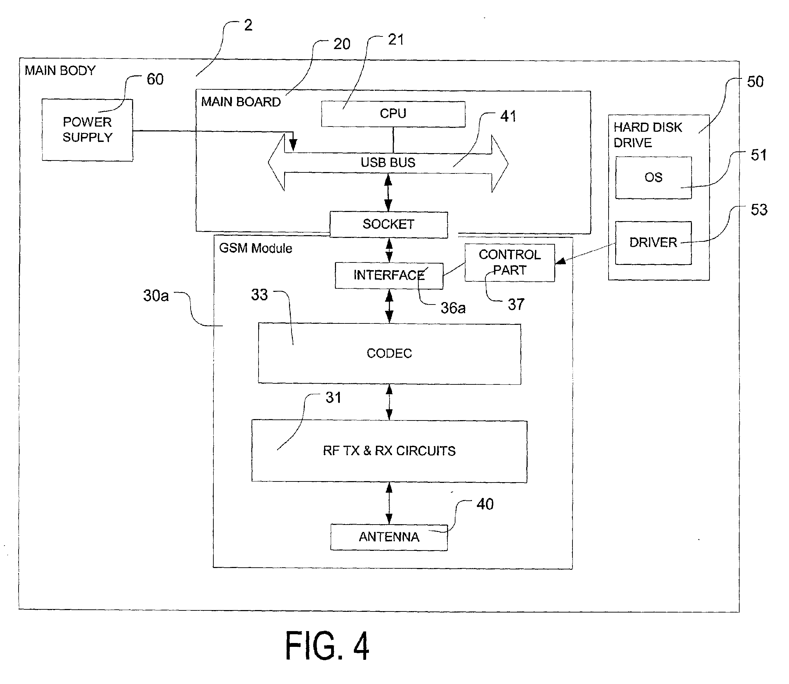

In the above description, the GSM module 30 is provided on the main board 20. However, as shown in Figure 4, the object of the present invention may be also achieved by providing a GSM module 30a on a subsidiary board separate from and electrically connected to the main board 20. In this case, in the main board 20a is provided with a socket 23 into which the GSM module 30 is plugged for data communication and electric power supply.

In the above description, the control part 37 is comprised of the microcontroller provided in the GSM module 30. However, the control part 37 may be implemented in the device driver for the GSM module 30 which then generates control signals for the interface 36 directly.

While in the foregoing, the wireless communication part is a GSM module, it will be understood that the wireless communication part could be for another mobile phone system or a wireless network protocol, such as IEEE 802.11.

## Claims

1. A portable computer apparatus including a wireless communication module (30; 30a) **characterised by** means (53) for determining whether use of the wireless communication module (30; 30a) is required and means (37) for controlling the supply of power to said module (30; 30a) in dependence on the result of said determination.

2. An apparatus according to claim 1, wherein the means (53) for determining whether use of the wireless communication module is required comprises a device driver for the module.

3. An apparatus according to claim 2, wherein means (37) for controlling the supply of power to the module comprises a processor comprised in the module.

4. An apparatus according to claim 1, 2 or 3, comprising a main board (20) containing a central processing unit, wherein the module (30) is integrated into the main board (20).

5. An apparatus according to claim 1, 2 or 3, comprising a main board (20a) containing a central processing unit, wherein the module (30a) is plugged into the main board (20a).

6. An apparatus according to claim 4 or 5, wherein the main board (20; 20a) includes a USB bus and the module (30; 30a) is configured to receive data and/or power from said bus.

7. A portable computer comprising a main body equipped with a main board with a CPU, and a power supply supplying electric power to the main board, further comprising:
a wireless communicating part including an RF transmitting and receiving part provided at the main body, electrically connected to the main board, and wirelessly transmitting and receiving predetermined data using an RF signal, and an AD converter converting an analog signal received through the RF transmitting and receiving part into a digital signal and transmitting the digital signal to the CPU, and converting a digital signal from the CPU into an analog signal and transmitting the analog signal through the RF transmitting and receiving part, and a connector electrically connected to the power supply and delivering electric power from the power supply to the wireless communicating part;
a wireless modem software program operating the wireless communicating part; and
a control part controlling the connector to deliver electric power from the power supply to the wireless communicating part so as to operate the wireless communicating part when the wireless modem software program is run in order to operate the wireless communicating part.

8. The portable computer according to claim 7, wherein the wireless communicating part is provided at the main board.

9. The portable computer according to claim 7, wherein the wireless communicating part is comprised of a sub-board separated from the main board and electrically connected to the main board.

10. The portable computer according to claim 8, wherein the connector further includes a USB line through which data is transmitted between the main board and the AD converter.

11. The portable computer according to claim 8, wherein the connector controls the electric power supplied to the wireless communicating part, and
the control part controls the electric power from the power supply to be supplied to the wireless communicating part by transmitting a control signal to the connector when the wireless modem software program is run in order to operate the wireless communicating part.

12. The portable computer according to claim 9, wherein the connector further includes a USB line through which data is transmitted between the main board and the AD converter.

13. The portable computer according to claim 9, wherein the connector controls the electric power supplied to the wireless communicating part, and
the control part controls the electric power from the power supply to be supplied to the wireless communicating part by transmitting a control signal to the connector when the wireless modem software program is run in order to operate the wireless communicating part.
